# EUROPÄISCHE PATENTSCHRIFT

(11) **EP 1 156 942 B1**
(45) Veröffentlichungstag und Bekanntmachung des Hinweises auf die Patenterteilung: **17.07.2002**
(21) Anmeldenummer: 00906371.0
(22) Anmeldetag: 24.02.2000
(51) Int. Cl.: B60K 41/16

(54) **ANTRIEBSSTRANGSTEUERUNG**
DRIVE TRAIN CONTROL
COMMANDE DE CHAINE CINEMATIQUE

(30) Priorität: 01.03.1999 DE 19908838
(43) Veröffentlichungstag der Anmeldung: 28.11.2001
(73) Patentinhaber: ZF FRIEDRICHSHAFEN Aktiengesellschaft, 88038 Friedrichshafen (DE)
(72) Erfinder: MÜLLER, Gerhard, D-88090 Immenstaad (DE); DENZLER, Rainer, D-88255 Baindt (DE)
(86) Internationale Anmeldenummer: EP0001507
(87) Internationale Veröffentlichungsnummer: WO0051836

(56) Entgegenhaltungen:
- EP-A- 0 082 951
- EP-A- 0 253 657
- EP-A- 0 415 048
- DE-A- 2 843 256
- US-A- 4 715 258
- US-A- 4 926 716

## Beschreibung

Die Erfindung bezieht sich auf ein Verfahren zur Antriebsstrangsteuerung zur gesamtheitlichen Steuerung von Antriebsmaschine und Getriebe für ein Fahrzeug oder eine selbstfahrende Arbeitsmaschine mit einer Antriebsmaschine mit Drehzahlregelung und einem stufenlos verstellbaren Getriebe mit Übersetzungsregelung entsprechend dem Oberbegriff von Anspruch 1 und bekannt aus der EP-A-253657.

Eine Antriebsstrangsteuerung der oben genannten Art ist auch in der nicht veröffentlichten DE-C-19744218 der Anmelderin offenbart.
Der Antriebsmotor und die Getriebeübersetzung werden jeweils so gesteuert, daß die Motor-Getriebe-Kombination in dem jeweiligen Betriebszustand möglichst wenig Kraftstoff verbraucht, jedoch bei Bedarf die erforderliche Leistung zur Verfügung steht. Dabei soll die zur Fahrzeuggeschwindigkeit benötigte Leistung bei möglichst niedriger Drehzahl des Antriebsmotors erreicht werden. Deshalb wird die Getriebeübersetzung auf einen Wert gesteuert, bei welchem die Antriebsmaschine die möglichst niedrigste Drehzahl einnimmt und dabei die geforderte Fahrzeuggeschwindigkeit erreicht wird. Die Drehzahl des Antriebsmotors wird erst erhöht, wenn die Soll-Geschwindigkeit nicht mehr erreicht werden kann.
Vom Fahrer kann dabei nur die gewünschte Fahrzeuggeschwindigkeit vorgegeben werden und die Antriebssteuerung übernimmt die Einstellung des Antriebsmotors und der Getriebeübersetzung. Dem Fahrer ist es somit nicht möglich, das Abtriebsdrehmoment des Getriebes zu beeinflussen, da die Antriebsstrangsteuerung die Motordrehzahl und die Übersetzung des Getriebes dem benötigten Abtriebsdrehmoment anpaßt, um die geforderte Fahrgeschwindigkeit zu erreichen. Steigt der Fahrwiderstand über die Rutschgrenze der Reifen, so wird unabhängig vom Fahrwiderstand die Abtriebsdrehzahl gehalten, was zu einem Durchdrehen der Räder führt.

Der Erfindung liegt die Aufgabe zugrunde, eine Antriebsstrangsteuerung zu schaffen, welche das Bewegen des Fahrzeugs über ein einziges Bedienelement ermöglicht und dabei der Antriebsstrang drehmomentabhängig gesteuert werden kann.

Die Aufgabe wird mit den Maßnahmen des Hauptanspruchs gelöst.
Dabei erfolgt das Einregeln der Fahrzeuggeschwindigkeit und somit der Abtriebsdrehzahl des Getriebes über die Leistungsvorgabe des Antriebsmotors. Die Motordrehzahl ist an das Fahrpedal gekoppelt und die Übersetzung des Getriebes wird immer so verstellt, daß der Motor in den Grenzlastbereich eingeregelt wird. Zusätzlich wird die Fahrpedalstellung mit Hilfe von Kennlinien dergestalt überlagert, daß bei geringerer Leistungsaufnahme, z. B. bei einer Bergabfahrt, die Getriebeübersetzung nicht auf ein Minimum verstellt wird und das Fahrzeug bei der Bergabfahrt nicht bis zur maximalen Geschwindigkeit beschleunigt. Weiterhin ist die Getriebeübersetzung von der Soll-Motordrehzahl abhängig, indem die Getriebeübersetzung erniedrigt wird, wenn sich die Antriebsmotordrehzahl erhöht. Um eine Beschädigung des Antriebsstrangs zu verhindern, ist es möglich, die Antriebsstrangsteuerung so auszugestalten, daß die Drehzahl des Antriebsmotors auf eine maximale Drehzahl begrenzt wird. Des weiteren besteht die Möglichkeit, die Antriebsmotordrehzahl in einem Geschwindigkeitsbereich, welcher unterhalb der maximalen Geschwindigkeit liegt, zu begrenzen, so daß in diesem Geschwindigkeitsbereich die Antriebsmotordrehzahl z. B. einen Wert von 1 900 l/min nicht übersteigt und somit weniger Kraftstoff verbraucht wird. Um einen Traktionsverlust der Räder bei niedrigen Fahrgeschwindigkeiten zu verhindern, wird die Drehzahl des Antriebsmotors im Schubbetrieb, abhängig von der Geschwindigkeit, begrenzt.
Indem das Fahrzeug über die Leistung des Antriebsmotors, welche über das Fahrpedal reguliert wird, beschleunigt bzw. verzögert wird, ist es möglich, in dem Fahrzustand "Zug" und Fahrzustand "Schub" drehmomentgesteuert zu fahren.

Weitere Ausgestaltungen der Erfindung sind dem Ausführungsbeispiel zu entnehmen.

Es zeigen:

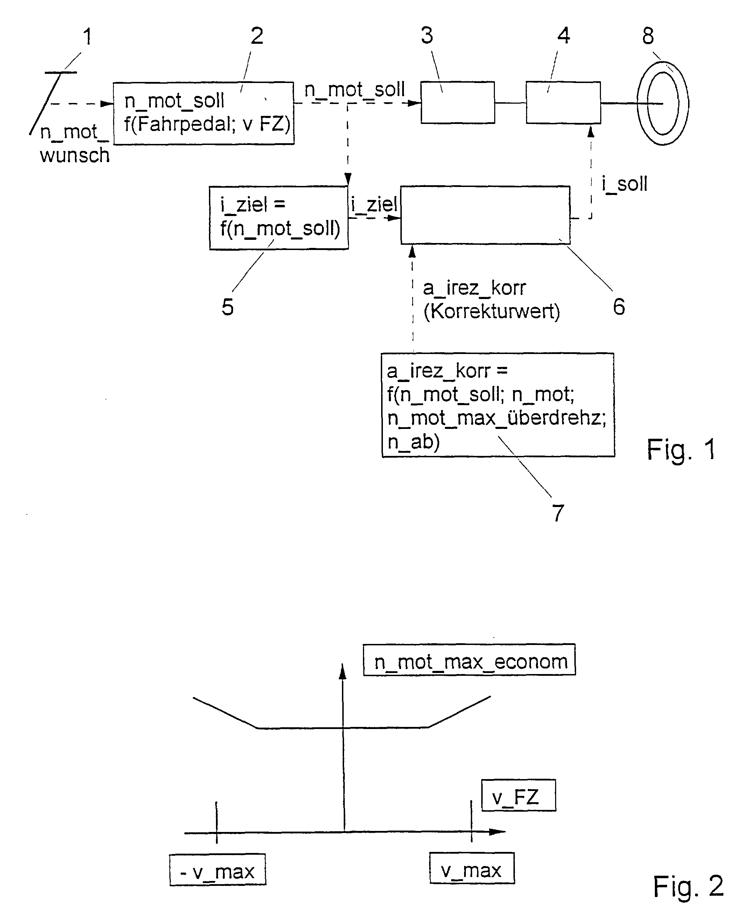

- Fig. 1: ein Blockschaltbild, in dem die Einbindung der Antriebsstrangsteuerung in das Fahrzeuggesamtsystem dargestellt ist;
- Fig. 2: die Funktionsweise des Drehzahlbegrenzers;
- Fig. 3: die Funktionsweise des Soll-Übersetzungsreglers;
- Fig. 4: die Funktionsweise des zweiten Übersetzungsreglers;
- Fig. 5: die Funktionsweise des Grenzlastreglers;

### Fig. 1:

Mit dem Fahrpedal 1 wird die Wunsch-Motordrehzahl n_mot_wunsch vorgegeben. Diese Wunsch-Motordrehzahl wird an den Drehzahlbegrenzer 2 weitergegeben, welcher die Wunsch-Motordrehzahl bei niedrigen Fahrgeschwindigkeiten begrenzt, damit das Fahrzeug in diesem Fahrzustand weniger Kraftstoff verbraucht. Der Drehzahlbegrenzer 2 gibt an den Antriebsmotor 3 und an den Übersetzungsregler 5 die Soll-Motordrehzahl n_mot_soll aus. Der Motor 3 versucht, durch Variation der Einspritzmenge die Soll-Motordrehzahl zu erreichen. Der Übersetzungsregler 5 errechnet aus einer abgelegten Kennlinie die Zielübersetzung i_ziel für das Getriebe. Die abgelegte Kennlinie ist dergestalt definiert, daß die Soll-Übersetzung des Getriebes bei steigender Soll-Motordrehzahl des Antriebsmotors abnimmt. Bei der Eckdrehzahl des Antriebsmotors erreicht die Übersetzung des Getriebes die mögliche Minimal-Übersetzung. Dieser Übergang kann fließend ausgeführt sein. Der Übersetzungsregler 5 gibt die Zielübersetzung i_ziel an den zweiten Übersetzungsregler 6 weiter. Der zweite Übersetzungsregler 6 wird von dem Grenzlastregler 7 beeinflußt. Der Grenzlastregler 7 wirkt unmittelbar mit dem zweiten Übersetzungsregler 6 zusammen. Der zweite Übersetzungsregler 6 besitzt unter anderem als Eingangsgröße die Zielübersetzung i_ziel vom ersten Übersetzungsregler 5. Diese Zielübersetzung i_ziel kann sich sprunghaft ändern, der Verstellmechanismus des stufenlosen Getriebes 4 jedoch nicht. Aus diesem Grund ist der Gradient*, mit welchem die Ist-Übersetzung des Getriebes 5 auf die Soll-Übersetzung gebracht werden soll, begrenzt. Da der Grenzlastregler 7 mit dem zweiten Übersetzungsregler 6 zusammenarbeitet, hat der Grenzlastregler 7 die Möglichkeit, auf die Übersetzung Einfluß zu nehmen. Der Grenzlastregler 7 beeinflußt den zweiten Übersetzungsregler 6 mit einem Korrekturfaktor *a_irez_korr*, welcher aufgrund der Drückung des Antriebsmotors 3 erzeugt wird. Sobald eine Motordrükkung vorliegt, wird die Übersetzung während der Drückung langsamer verstellt bzw. zurückgestellt, wodurch dem Antriebsmotor 3 die Möglichkeit gegeben wird, die Drückung auszuregeln. Die Übersetzung kann auch zurückgestellt werden, das heißt die Übersetzung in entgegengesetzter Richtung verstellt werden, wenn/a_irez_korr/>/Gradient/ das heißt wenn die Motordrückung einen bestimmten Wert überschreitet. Die Drückung des Antriebsmotors 3 ist durch die Differenz der vorgegebenen Motordrehzahl und der tatsächlichen Motordrehzahl definiert. Eine Korrektur durch den Grenzlastregler 7 wird immer dann vorgenommen, wenn der Antriebsmotor 3 in seiner Drehzahl unterhalb der Vorgabe gedrückt bzw. oberhalb einer festgelegten maximalen Grenzdrehzahl geschoben wird. Die von dem Grenzlastregler 7 korrigierte Soll-Übersetzung i_soll wird an das Getriebe 4 weitergegeben und das Getriebe 4 somit auf die Soll-Übersetzung verstellt. Das gewünschte Drehmoment steht somit am Rad 8 zur Verfügung.

Soll das Fahrzeug beschleunigt werden, so wird durch Verändern der Stellung des Fahrpedals 1 das Eingangssignal am Drehzahlbegrenzer 2 auf eine größere Wunsch-Motordrehzahl verändert. Innerhalb der zulässigen Werte des Drehzahlbegrenzers 2 gibt der Drehzahlbegrenzer 2 ein Soll-Motordrehzahlsignal aus und erhöht damit die Einspritzmenge am Antriebsmotor 3. Durch das geänderte Soll-Motordrehzahlsignal verändert der Übersetzungsregler 5 die Zielübersetzung oder läßt die Zielübersetzung unverändert, wenn diese schon die minimale Zielübersetzung erreicht hat. Der Grenzlastregler 7 korrigiert die Zielübersetzung, um dem Antriebsmotor 1 ein Hochdrehen auf die neue Soll-Motordrehzahl zu ermöglichen. Eine ausreichende Regelabweichung der Soll-Motordrehzahl minus Ist-Motordrehzahl bleibt erhalten, bis das Getriebe wieder auf die neue Zielübersetzung verstellt hat.

Soll das Fahrzeug bei Konstantfahrt betrieben werden, wird zwischen zwei Betriebszuständen unterschieden:

### Konstantfahrt bei Motor-Vollast:

Ist die Zielübersetzung kleiner als die tatsächliche Getriebeübersetzung, stellt sich durch die maximale Leistung des Antriebsmotors 3 und der benötigten Fahrleistung ein Gleichgewicht ein.

### Konstantfahrt bei Motor-Teillast:

Ist die Zielübersetzung kleiner als die tatsächliche Übersetzung und die maximale Motorleistung noch nicht erreicht, wird die Zielübersetzung eingestellt und bei Erreichen der Zielübersetzung die Einspritzmenge vom Motor-Controller so weit zurückgenommen, bis sich dort ein Gleichgewicht einstellt.

Soll das Fahrzeug verzögert werden, so wird die Wunsch-Motordrehzahl durch Verändern des Fahrpedals 1 erniedrigt. Der Drehzahlbegrenzer 2 gibt innerhalb seiner zulässigen Werte die veränderte Soll-Motordrehzahl aus. Der Motor-Controller reduziert die Einspritzmenge am Antriebsmotor 3. Bei stärkerem Zurücknehmen der Soll-Motordrehzahl bzw. bei Zurücknehmen der Soll-Motordrehzahl unterhalb der Eckdrehzahl des Antriebsmotors 3 wird zusätzlich die Zielübersetzung erniedrigt. Dadurch wird die Übersetzung des Getriebes verändert und die Drehzahl des Antriebsmotors 3 wird erhöht und somit erhöht sich auch die Bremswirkung des Antriebsmotors 3. Da die Soll-Drehzahl des Antriebsmotors 3 über den Übersetzungsregler 5 mit der Zielübersetzung des Getriebes 4 verbunden ist, hat der Fahrer die Möglichkeit, die Schubdrehzahl des Motors mit dem Fahrpedal zu variieren. Steigt die Schubdrehzahl des Antriebsmotors 3 über die maximal zulässige Überdrehzahl, so greift die Antriebssteuerung erneut ein und verhindert ein weiteres Überdrehen von Motor und Getriebe. Der Fahrer hat hierbei jederzeit die Möglichkeit, die Bremswirkung mit der Betriebsbremse zu unterstützen.

### Fig. 2:

Der Drehzahlbegrenzer 2 hat die Aufgabe, die Motordrehzahl im Zugbetrieb auf die Drehzahl maximaler Leistung, z. B. 1 900 l/min, zu begrenzen. Erst wenn eine sehr hohe Fahrgeschwindigkeit eine höhere Drehzahl erforderlich macht und das Getriebe 4 schon auf die minimale Übersetzung verstellt ist, wird eine höhere Drehzahl freigegeben. Indem der Antriebsmotor 3 auf niedrigere Drehzahlen begrenzt ist, benötigt die Antriebseinheit weniger Kraftstoff. In dem Diagramm ist die Motordrehzahl n_mot_max_econom über der Fahrzeuggeschwindigkeit v_max dargestellt.

### Fig. 3:

Der Übersetzungsregler 5 bildet die Zielübersetzung i_ziel des Getriebes. Dabei nimmt die Ziel-Übersetzung über der Soll-Motordrehzahl n_mot_soll ab und erreicht bei der Eckdrehzahl das Minimum. Im Diagramm ist der Verlauf der Ziel-Übersetzung i_ziel über der Soll-Motordrehzahl dargestellt. Die maximale Zielübersetzung bei minimaler Soll-Motordrehzahl ist nicht unendlich, sondern bei einem endlichen Wert, um im Fahrzeug eine Mindestgeschwindigkeit bei Fahrt zu erreichen. Dadurch werden Fahrzustände mit hoher Schubdrehzahl des Motors und niedriger Fahrgeschwindigkeit vermieden, da dort die Gefahr des Traktionsverlustes besteht.

### Fig. 4:

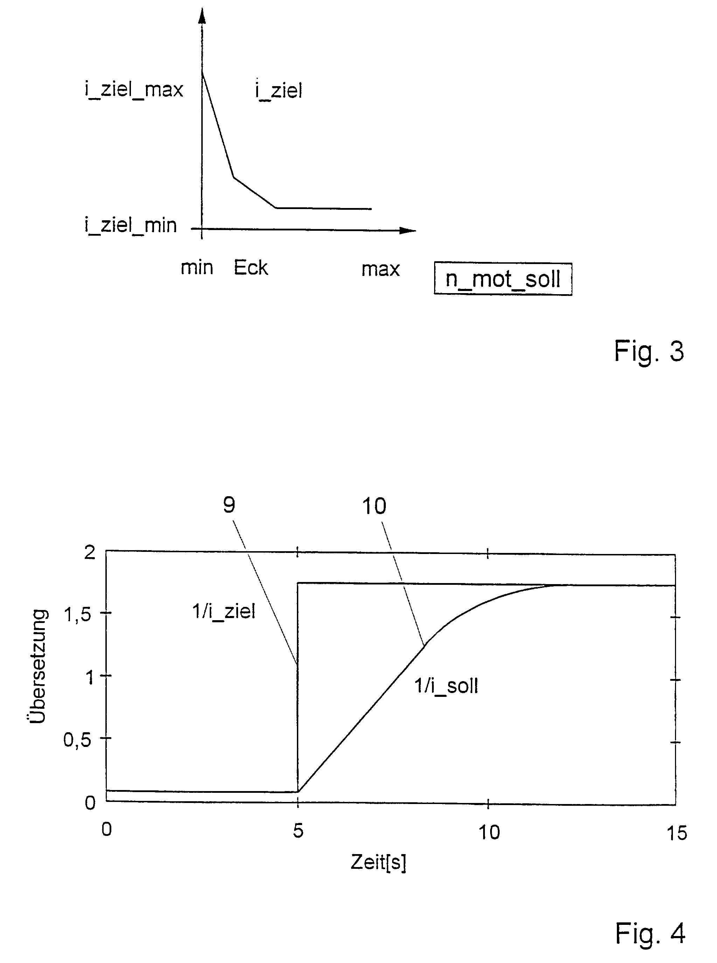

In Fig. 4 ist die Wirkungsweise des zweiten Übersetzungsreglers 6 ohne den Einfluß des Grenzlastreglers 7 über der Zeit dargestellt. Dabei stellt die Linie 9 den Verlauf der reziproken Zielübersetzung 1/i_ziel über der Zeit dar, welche als Eingangssignal in den zweiten Übersetzungsregler 6 eingeht. Die Linie 10 stellt die reziproke Soll-Übersetzung 1/i_soll über der Zeit dar, welche als Ausgangssignal den zweiten Übersetzungsregler 6 verläßt. Ändert sich die reziproke Zielübersetzung sprunghaft, so erzeugt der zweite Übersetzungsregler 6 einen gradientenbegrenzten reziproken Soll-Übersetzungsverlauf. Bei dieser Darstellung hatte der Grenzlastregler 7 keinen Einfluß.

### Fig. 5:

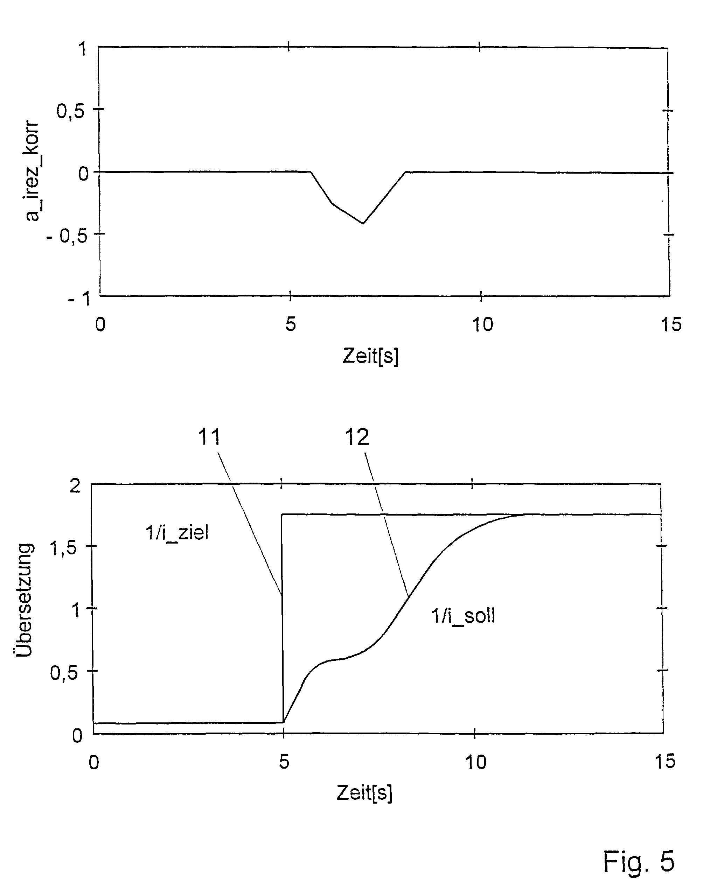

In Fig. 5 ist die Wirkungsweise des zweiten Übersetzungsreglers 6 in Verbindung mit dem Grenzlastregler 7 dargestellt. Im oberen Diagramm ist die Korrektur a_irez_korr, welche der Grenzlastregler 7 an den zweiten Übersetzungsregler 6 ausgibt, über der Zeit dargestellt. In dem unteren Diagramm ist mit der Linie 11 der Verlauf der reziproken Zielübersetzung 1/i_ziel und mit der Linie 12 der Verlauf der reziproken Soll-Übersetzung 1/i_soll dargestellt. Die reziproke Zielübersetzung wird sprunghaft verändert und die reziproke Soll-Übersetzung folgt gradientenbegrenzt. Sobald eine Motordrückung vorliegt, gibt der Grenzlastregler 7 eine Korrektur an den zweiten Übersetzungsregler 6 und die reziproke Soll-Übersetzung wird während der Drückung des Antriebsmotors 3 langsamer verstellt, wodurch dem Antriebsmotor 3 die Möglichkeit gegeben wird, die Drückung auszuregeln.

### Bezugszeichen

- 1: Fahrpedal
- 2: Drehzahlbegrenzer
- 3: Antriebsmotor
- 4: Getriebe
- 5: Übersetzungsregler
- 6: zweiter Übersetzungsregler
- 7: Grenzlastregler
- 8: Rad
- 9: Linie
- 10: Linie
- 11: Linie
- 12: Linie
- 13: Korrektur
- 14: Zielübersetzung
- 15: Ausgang
- 16: Motor-Soll-Drehzahl
- 17: Motor-Ist-Drehzahl
- 18: Getriebeabtriebs-Drehzahl

## Patentansprüche

1. Verfahren zur Antriebsstrangsteuerung für ein Fahrzeug oder eine selbstfahrende Arbeitsmaschine mit einer Antriebsmaschine (3) mit Regelung und einem stufenlos verstellbaren Getriebe (4) mit Übersetzungsregelung und mit einem Fahrpedal, mit welchem eine Drehzahlvorgabe der Antriebsmaschine erzeugt wird, wodurch die Drehzahl der Antriebsmaschine über deren Regelung eingeregelt wird,
**dadurch gekennzeichnet,**
**daß** die Fahrgeschwindigkeit über eine Drehzahlvorgabe der Antriebsmaschine erfolgt, indem das stufenlos verstellbare Getriebe in Abhängigkeit von der Drehzahlvorgabe der Antriebsmaschine so verstellt wird, daß zu jeder Drehzahlvorgabe der Antriebsmaschine die Antriebsmaschine ein definiertes und der Drehzahlvorgabe zugeordnetes maximales Drehmoment erzeugt.

2. Verfahren zur Antriebsstrangsteuerung nach Anspruch 1, **dadurch gekennzeichnet, daß** die Drehzahlvorgabe für die Antriebsmaschine (3) in ihrer Höhe begrenzbar ist.

3. Verfahren zur Antriebsstrangsteuerung nach Anspruch 2, **dadurch gekennzeichnet, daß** die Drehzahlbegrenzung der Antriebsmaschine (3) durch einen Drehzahlbegrenzer (2) nur innerhalb eines Bereiches begrenzbar ist, welcher unterhalb der maximalen Fahrgeschwindigkeit liegt.

4. Verfahren zur Antriebsstrangsteuerung nach Anspruch 1, **dadurch gekennzeichnet, daß** im Schubbetrieb des Fahrzeugs die Getriebeübersetzung so verstellbar ist, daß unzulässige Drehzahlen im Antriebsstrang vermieden werden.

5. Verfahren zur Antriebsstrangsteuerung nach Anspruch 1, **dadurch gekennzeichnet, daß** die Übersetzung des Getriebes (4) mit steigender Drehzahlvorgabe der Antriebsmaschine (3) sich verringert.

6. Verfahren zur Antriebsstrangsteuerung nach Anspruch 1, **dadurch gekennzeichnet, daß** die Übersetzung des Getriebes (4) einen definierten, minimalen Wert erreicht, wenn die Eckdrehzahl der Antriebsmaschine (3) vorliegt.

7. Verfahren zur Antriebsstrangsteuerung nach Anspruch 1, **dadurch gekennzeichnet, daß** eine aus der Drehzahlvorgabe der Antriebsmaschine (3) gebildete Übersetzungsvorgabe gradientenbegrenzbar ist und die Übersetzung des Getriebes (4) verstellt.

8. Verfahren zur Antriebsstrangsteuerung nach Anspruch 7, **dadurch gekennzeichnet, daß** die gradientenbegrenzte Übersetzungsvorgabe in Abhängigkeit der Drückung der Drehzahl der Antriebsmaschine (3) so beeinflußbar ist, daß die Übersetzung des Getriebes (4) während der Drückung der Antriebsmaschine langsamer und bei einer Drückung über einen bestimmten Wert in die entgegengesetzte Richtung verstellt wird.

## Claims

1. Method of drive train control for a vehicle or a self-driving working machine comprising a prime mover (3) having a regulation and a continuously variable transmission (4) having transmission ratio control and comprising an accelerator with which a rotational-speed setting of the prime mover is generated, as a result of which the rotational speed of the prime mover is adjusted via its regulation, **characterized in that** the travelling speed results from the rotational-speed setting of the prime mover as a result of the fact that the continuously variable transmission is varied as a function of the rotational-speed setting of the prime mover in such a way that the prime mover generates a defined and maximum torque assigned to the rotational-speed setting for every rotational-speed setting of the prime mover.

2. Method of drive train control according to Claim 1, **characterized in that** the rotational-speed setting for the prime mover (3) can be limited in its level.

3. Method of drive train control according to Claim 2, **characterized in that** the rotational-speed limitation of the prime mover (3) can be limited by a rotational-speed limiter (2) only within a range that is situated below the maximum travelling speed.

4. Method of drive train control according to Claim 1, **characterized in that**, in the coasting mode of the vehicle, the transmission ratio can be varied so that impermissible rotational speeds are avoided in the drive train.

5. Method of drive train control according to Claim 1, **characterized in that** the transmission ratio of the transmission (4) decreases with increasing rotational-speed setting of the prime mover (3).

6. Method of drive train control according to Claim 1, **characterized in that** the transmission ratio of the transmission (4) reaches a defined minimum value if the cutoff rotational speed of the prime mover (3) obtains.

7. Method of drive train control according to Claim 1, **characterized in that** a transmission-ratio setting formed from the rotational-speed setting of the prime mover (3) can be gradient-limited and varies the transmission ratio of the transmission (4).

8. Method of drive train control according to Claim 7, **characterized in that** the gradient-limited transmission-ratio setting can be influenced as a function of the depression of the rotational speed of the prime mover (3) in such a way that the transmission ratio of the transmission (4) becomes slower during the depression of the prime mover and, with a depression above a certain value, is varied in the opposite direction.

## Revendications

1. Procédé de commande de chaîne cinématique pour un véhicule ou un engin automoteur qui comprend un moteur d'entraînement (3) équipé d'une régulation et une transmission (4) réglable en continu avec régulation du rapport de transmission et qui comprend une pédale d'accélérateur avec laquelle on produit une prédétermination de la vitesse de rotation du moteur d'entraînement, la vitesse de rotation du moteur d'entraînement étant réglée au moyen de la régulation,
**caractérisé en ce que**
la vitesse de marche est commandée par une prédétermination de la vitesse de rotation du moteur d'entraînement par le fait que la transmission réglable en continu est ajustée en fonction de la prédétermination de vitesse de rotation du moteur d'entraînement de manière qu'à chaque prédétermination de vitesse de rotation du moteur d'entraînement, le moteur d'entraînement produise un couple maximal défini et qui correspond à la prédétermination de vitesse de rotation.

2. Procédé de commande de chaîne cinématique selon la revendication 1, **caractérisé en ce que** la prédétermination de vitesse de rotation pour le moteur d'entraînement (3) est limitée en niveau.

3. Procédé de commande de chaîne cinématique selon la revendication 2, **caractérisé en ce que** la limitation de la vitesse de rotation du moteur d'entraînement (3) ne peut être limitée par un limiteur de vitesse de rotation (2) que dans les limites d'une plage qui se trouve au-dessous de la vitesse de marche maximale.

4. Procédé de commande de chaîne cinématique selon la revendication 1, **caractérisé en ce que** le rapport de la transmission peut être ajusté dans le fonctionnement en poussée de telle manière que ceci évite des vitesses de rotation inadmissibles dans la chaîne cinématique.

5. Procédé de commande de chaîne cinématique selon la revendication 1, **caractérisé en ce que** le rapport de la transmission (4) se réduit avec l'accroissement de la prédétermination de vitesse de rotation du moteur d'entraînement (3).

6. Procédé de commande de chaîne cinématique selon la revendication 1, **caractérisé en ce que** le rapport de la transmission (4) atteint une valeur définie, minimale, lorsqu'on est en présence de la vitesse de rotation de coupure du moteur d'entraînement (3).

7. Procédé de commande de chaîne cinématique selon la revendication 1, **caractérisé en ce qu'**une prédétermination de rapport de transmission formée à partir de la prédétermination de vitesse de rotation du moteur d'entraînement (3) peut être limitée en gradient et que le rapport de la transmission (4) est ajusté.

8. Procédé de commande de chaîne cinématique selon la revendication 1, **caractérisé en ce que** la prédétermination du rapport de transmission limitée en gradient peut être influencée en fonction de la réduction de la vitesse de rotation du moteur d'entraînement (3) de telle manière que le rapport de la transmission (4) soit ajusté sur une valeur plus lente pendant la réduction du moteur d'entraînement et ajusté en sens inverse sur une valeur déterminée en présence d'une réduction.
